# EUROPEAN PATENT SPECIFICATION

(11) **EP 4 180 172 B1**
(45) Date of publication and mention of the grant of the patent: **02.04.2025**
(21) Application number: 20944172.4
(22) Date of filing: 09.07.2020
(51) Int. Cl.: B23Q 3/155, B23B 39/04, B23B 47/26

(54) **HORIZONTAL BORING MACHINE INCLUDING AN ATTACHMENT EXCHANGE APPARATUS**
HORIZONTALBOHRMASCHINE MIT EINER VORRICHTUNG ZUM AUSTAUSCH VON BEFESTIGUNGEN
MACHINE DE PERÇAGE HORIZONTALE COMPRENANT UN APPAREIL D'ÉCHANGE D'ACCESSOIRES

(43) Date of publication of application: 17.05.2023
(73) Proprietor: DN Solutions Co., Ltd., Changwon-si, Gyeongsangnam-do 51537 (KR)
(72) Inventor: LIM, Sungjin, Busan 46215 (KR)
(74) Representative: BCKIP Part mbB
(86) International application number: PCT/KR2020/009000
(87) International publication number: WO 2022/010010

(56) References cited:
- WO-A1-2018/226061
- CN-U- 205 630 072
- CN-U- 209 532 717
- JP-A- 2011 173 196
- KR-A- 19990 062 108
- KR-A- 20210 004 051
- US-A- 4 494 282
- US-B1- 6 740 839

## Description

### [FIELD OF THE INVENTION]

The present invention relates to a horizontal boring machine including an attachment exchange apparatus, and more particularly, to a horizontal boring machine including an attachment exchange apparatus for exchanging an attachment mounted on a spindle head of a horizontal boring machine for a new attachment accommodated in a stacker, and the horizontal boring machine .

### [BACKGROUND OF THE INVENTION]

In general, a horizontal boring machine may include a spindle head, a table mechanism, a stacker mechanism, and the like. An attachment for machining a material may be mounted on the spindle head. The table mechanism may convey the material to be machined by the attachment. The stacker mechanism may accommodate a new attachment to be replaced with the attachment mounted on the spindle head.

According to the relevant technologies, the table mechanism may be moved toward a front side of the spindle head by a ball screw. The stacker mechanism may be moved toward the front side of the spindle head by another ball screw. The two ball screws may be positioned on different horizontal planes. The table mechanism may need to have a large size to prevent the ball screws, which are positioned on the different horizontal planes, from interfering with each other. In addition, because the two ball screws are used and components for independently operating the ball screws are used, the unit price of the horizontal boring machine may increase.

Document US 6 740 839 B1 discloses a transporting and positioning device for tool magazine of a bridge type machine tool. The device comprises a pair of parallel guide-ways on a plate, a seat slidably mounted on the guide-ways for supporting the tool magazine, a drive mechanism including a cylinder, an extendable positioning shaft, a connection block adjacent the plate the connection block including a top hole and being fixed to the table, and a second cylinder having an extendable second positioning shaft. In an operating state of the machine tool, the second positioning shaft is actuated by the second cylinder to project an adjustable distance through the plate to urge against the seat for fastening the seat and the tool magazine. A tool change is performed after fastening the positioning shaft in the hole.

Document WO 2 018 226 061 A1 discloses an automatic attachment changer and a boring machine having the same. The automatic attachment changer comprises a stacker including at least one storage cell, a conveyor for conveying the stacker, and a drive control unit for automatically changing the attachment by driving the stacker and the conveyor so that a selected attachment and a spindle assembly are engaged. During the attachment change process, a rotary shaft is automatically returned to the original position thereof and attachment information is automatically reset, thereby increasing the efficiency and accuracy of the attachment change.

### [INVENTION]

### [Summary]

It is an object of the present invention to provide a horizontal boring machine including an attachment exchange apparatus, which is capable of operating a table mechanism and a stacker mechanism by using a simple structure.

To this end, the present invention provides a horizontal boring machine including the attachment exchange apparatus in accordance with claim 1.

An attachment exchange apparatus of a horizontal boring machine according to one aspect of the present invention includes a docking mechanism and a locating mechanism. The docking mechanism is disposed between a stacker for accommodating an attachment of the horizontal boring machine and a table for conveying a material in a horizontal direction. The docking mechanism docks the stacker on the table in a mode in which an attachment mounted on a spindle head of the horizontal boring machine is exchanged for the attachment accommodated in the stacker. The locating mechanism fixes a position of the stacker in a mode in which the material is processed with the attachment mounted on the spindle head.

In the present invention, the docking mechanism includes: a clamper mounted on the table and configured to move in the horizontal direction; and a clamping pin mounted on the stacker and configured to be clamped by the clamper in the mode in which the attachment is exchanged.

The clamper has a clamping groove into which the clamping pin is inserted.

The docking mechanism further includes a clamping block on which the clamping pin is installed, the clamping block extending from the stacker toward the table in the horizontal direction.

The locating mechanism includes: a locating bushing mounted on the stacker in the horizontal direction; a locating pin inserted into the locating bushing in the mode in which the material is machined; and an actuator configured to selectively move the locating pin upward or downward.

In the exemplary embodiments, the actuator may include a cylinder.

A horizontal boring machine according to the present invention includes a spindle head, a table mechanism, a stacker mechanism, a docking mechanism, and a locating mechanism. An attachment for machining a material is mounted on the spindle head. The table mechanism is disposed at a front side of the spindle head and convey the material in a horizontal direction. The stacker mechanism is disposed at the front side of the spindle head and accommodate a new attachment. The docking mechanism is disposed between the stacker mechanism and the table mechanism and dock the stacker mechanism on the table mechanism in a mode in which the attachment mounted on the spindle head is exchanged for the attachment accommodated in the stacker mechanism. The locating mechanism fixes a position of the stacker mechanism in a mode in which the material is machined by the attachment mounted on the spindle head.

The table mechanism includes: a table bed disposed in the horizontal direction; a table connected to be movable in the horizontal direction on the table bed; a ball screw rotatably disposed on the table bed and configured to engage with the table; and a motor configured to rotate the ball screw.

The table mechanism further includes a table base interposed between the table bed and the table and configured to engage with the ball screw, the table base being configured to be selectively docked on the stacker mechanism by the docking mechanism.

**In** the exemplary embodiment, the table mechanism may further include a pair of guide shafts disposed on the table bed and configured to guide a horizontal movement of the table base.

**In** the present invention, the locating mechanism fixes the stacker mechanism to the table bed.

**In** the exemplary embodiment, the stacker mechanism may include: a stacker configured to accommodate the attachment; and a stacker base on which the stacker is mounted, the stacker base being configured to be selectively docked on the table mechanism by the docking mechanism.

**In** the present invention, the docking mechanism includes: a clamper mounted on the table mechanism and configured to move in the horizontal direction, the clamper having a clamping groove; a clamping block extending in the horizontal direction from the stacker mechanism to the table mechanism; and a clamping pin mounted on the clamping block and configured to be inserted into the clamping groove in the mode in which the attachment is exchanged.

The locating mechanism includes: a locating bushing mounted on the stacker mechanism in the horizontal direction; a locating pin configured to be inserted into the locating bushing in the mode in which the material is machined; and a cylinder configured to selectively move the locating pin upward or downward.

According to the present invention, in the material machining mode, the docking mechanism does not dock the stacker mechanism on the table mechanism, and the locating mechanism fixes the stacker mechanism to the table bed. In contrast, in the attachment exchange mode, the stacker mechanism is unfixed from the locating mechanism, and the docking mechanism docks the stacker mechanism on the table mechanism. Therefore, in the attachment exchange mode, the stacker mechanism may be conveyed together with the table mechanism by using only the single ball screw for conveying the table mechanism. Therefore, because the attachment exchange apparatus does not include a separate ball screw and components related to the separate ball screw, the attachment exchange apparatus may have a small size and a simple structure. As a result, the unit price of the horizontal boring machine may be reduced.

### [Description of the Drawings]

FIGS. 1 and 2 are perspective views illustrating a horizontal boring machine having an attachment exchange apparatus according to the present invention.
FIG. 3 is a cross-sectional view illustrating operations of a docking mechanism and a locating mechanism of the attachment exchange apparatus in FIG. 1 in a material machining mode.
FIG. 4 is a cross-sectional view illustrating operations of the docking mechanism and the locating mechanism of the attachment exchange apparatus in FIG. 1 in an attachment exchange mode.
FIGS. 5 to 7 are side views sequentially illustrating operations of the horizontal boring machine in FIG. 1 in the attachment exchange mode.

### [Description of Main Reference Numerals of Drawings]

100: Spindle head
110: Column
120: Conveyance mechanism
200: Table mechanism
210: Table bed
220: Ball screw
230: Table base
240: Motor
250: Table
260: Guide shaft
300: Stacker mechanism
310: Stacker
320: Stacker base
400: Docking mechanism
410: Clamper
412: Clamping groove
420: Clamping block
430: Clamping pin
500: Locating mechanism
510: Locating bushing
520: Locating pin
530: Actuator

### [Detailed Description of Certain Inventive Embodiment]

Hereinafter, exemplary embodiments of the present invention will be described in detail with reference to the accompanying drawings.

The present invention may be variously modified and may have various forms, and particular embodiments illustrated in the drawings will be described in detail herein. However, the description of the exemplary embodiments is not intended to limit the present invention to the particular exemplary embodiments. In the description of the drawings, similar reference numerals are used for similar constituent elements.

The terms such as "first" and "second" may be used to describe various constituent elements, but the constituent elements should not be limited by the terms. These terms are used only to distinguish one constituent element from another constituent element. For example, a first component may be named a second component, and similarly, the second component may also be named the first component, without departing from the scope of the present invention.

The terminology used herein is used for the purpose of describing particular embodiments only and is not intended to limit the present invention. Singular expressions include plural expressions unless clearly described as different meanings in the context. In the present application, the terms "comprises," "comprising," "includes," "including," "containing," "has," "having" or other variations thereof are inclusive and therefore specify the presence of stated features, integers, steps, operations, elements, components, and/or combinations thereof, but do not preclude the presence or addition of one or more other features, integers, steps, operations, elements, components, and/or combinations thereof.

Unless otherwise defined, all terms used herein, including technical or scientific terms, have the same meaning as commonly understood by those skilled in the art to which the present invention pertains. The terms such as those defined in a commonly used dictionary should be interpreted as having meanings consistent with meanings in the context of related technologies and should not be interpreted as ideal or excessively formal meanings unless explicitly defined in the present application.

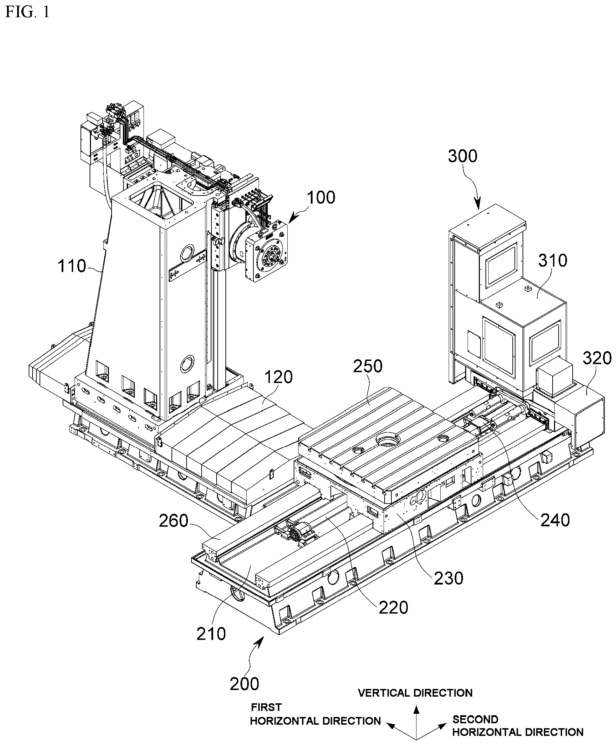

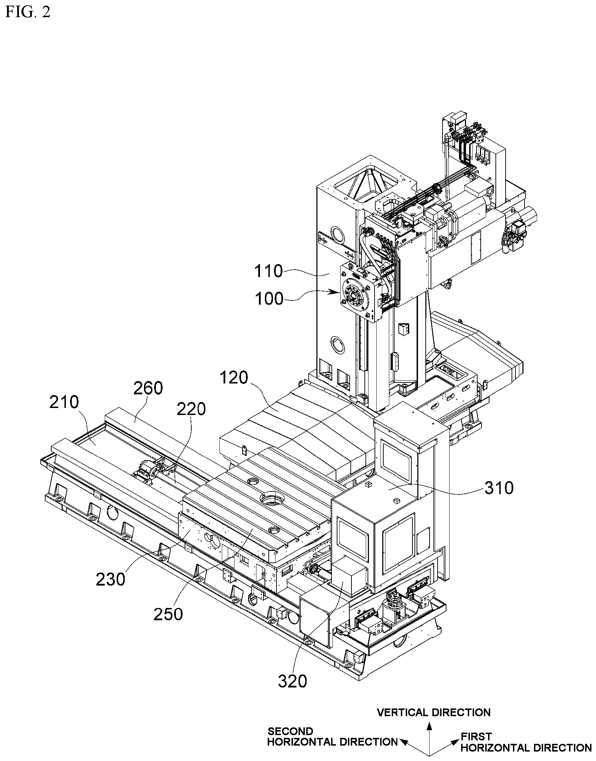

FIGS. 1 and 2 are perspective views illustrating a horizontal boring machine having an attachment exchange apparatus according to the present invention.

Referring to FIGS. 1 and 2, a horizontal boring machine according to the present invention includes a spindle head 100, a table mechanism 200, a stacker mechanism 300, and an attachment exchange apparatus.

The spindle head 100 clamps an attachment for machining a material. The spindle head 100 may be disposed at a lateral side of a column 110 standing vertically. The column 110 may be conveyed in a first horizontal direction by a conveyance mechanism 120.

The table mechanism 200 and the stacker mechanism 300 are disposed at a front side of the spindle head 100. The table mechanism 200 and the stacker mechanism 300 may be moved in a second horizontal direction substantially perpendicular to the first horizontal direction. The table mechanism 200 conveys a material in the second horizontal direction. The stacker mechanism 300 accommodates a new attachment to be replaced with an attachment mounted on the spindle head 100.

The table mechanism 200 includes a table bed 210, a ball screw 220, a table base 230, a motor 240, a table 250, and a pair of guide shafts 260. The table bed 210 is disposed in the second horizontal direction. The ball screw 220 is disposed on a central portion of an upper surface of the table bed 210 and arranged in the second horizontal direction. **In** particular, the ball screw 220 may be disposed on the upper surface of the table bed 210 and configured to be rotatable about the second horizontal direction.

The table base 230 engages with the ball screw 220. That is, a lower surface of the table base 230 engages with the ball screw 220. The motor 240 is connected to one end of the ball screw 220. The motor 240 rotates the ball screw 220 in a forward direction or a reverse direction. Therefore, the table base 230 may move forward or rearward on the upper surface of the table bed 210 in the second horizontal direction in accordance with the rotation direction of the ball screw 220 rotated by the motor 240. In the present embodiment, the motor 240 may include a servo motor. In particular, in the present embodiment, only the single ball screw 220 may be used.

The table 250 is installed on the upper surface of the table base 230. The table 250 may move forward or rearward together with the table base 230 in accordance with the rotation direction of the ball screw 220. The material may be disposed on an upper surface of the table 250. Therefore, the material may be conveyed to the front side of the spindle head 100 by the table 250.

The pair of guide shafts 260 may be disposed on portions of the upper surface of the table bed 210 disposed at two opposite sides of the ball screw 220. The lower surface of the table base 230 may be movably connected to the guide shafts 260. Therefore, the conveyance of the table base 230 in the second horizontal direction may be guided by the guide shafts 260.

The stacker mechanism 300 may include a stacker 310 and a stacker base 320. The stacker 310 may accommodate a new attachment. The stacker base 320 may be connected to a lower surface of the stacker 310. The stacker base 320 may be connected to the upper surface of the table bed 210 so as to be movable in the second horizontal direction. In particular, a lower surface of the stacker base 320 may be movably connected to the guide shafts 260. Therefore, the conveyance of the stacker base 320 in the second horizontal direction may be guided by the guide shafts 260.

The attachment exchange apparatus according to the present invention includes a docking mechanism 400 and a locating mechanism 500. The docking mechanism 400 is disposed between the table mechanism 200 and the stacker mechanism 300 and dock the stacker mechanism 300 on the table mechanism 200 in an attachment exchange mode. In contrast, the locating mechanism 500 is disposed on a rear surface of the stacker mechanism 300 opposite to the table mechanism 200 and may fix the stacker mechanism 300 in a material machining mode.

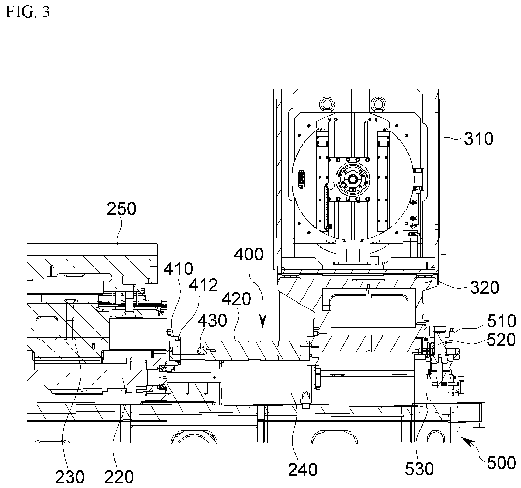

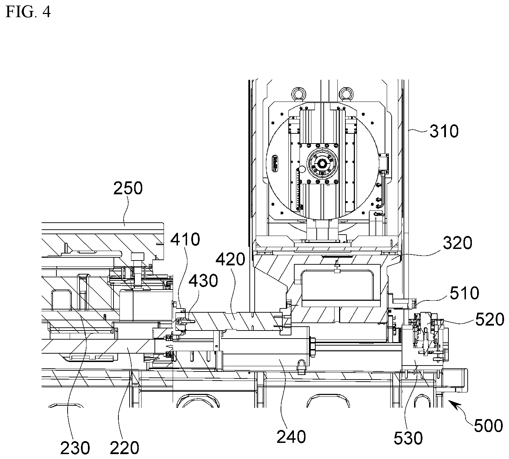

FIG. 3 is a cross-sectional view illustrating operations of the docking mechanism and the locating mechanism of the attachment exchange apparatus in FIG. 1 in the material machining mode, and FIG. 4 is a cross-sectional view illustrating operations of the docking mechanism and the locating mechanism of the attachment exchange apparatus in FIG. 1 in the attachment exchange mode.

Referring to FIGS. 3 and 4, the docking mechanism 400 includes a clamper 410, a clamping block 420, and a clamping pin 430. The clamper 410 is installed on the table mechanism 200. Specifically, the clamper 410 may be installed on the table base 230. In particular, the clamper 410 may be disposed on a rear surface of the table base 230 that is directed toward the stacker mechanism 300. The clamper 410 may have a clamping groove 412.

The clamping block 420 is installed on the stacker mechanism 300. In particular, the clamping block 420 extends in the second horizontal direction from a front side of the stacker base 320 that is directed toward the table base 230. The clamping pin 430 is installed at a front side of the clamping block 420 that is directed toward the clamper 410. In the attachment exchange mode, the clamping pin 430 is inserted into the clamping groove 412 of the clamper 410. Therefore, the table mechanism 200 and the stacker mechanism 300 may be connected to each other by means of the clamping pin 430 clamped by the clamper 410.

Therefore, conveyance power of the ball screw 220 may be transmitted to the stacker mechanism 300 through the table mechanism 200 and the docking mechanism 400. Therefore, the stacker mechanism 300 may move forward or rearward in the second horizontal direction together with the table mechanism 200. The conveyance of the stacker mechanism 300 may be implemented by the single ball screw 220 by the docking mechanism 400.

The locating mechanism 500 includes a locating bushing 510, a locating pin 520, and an actuator 530. The locating bushing 510 may be installed on the rear surface of the stacker base 320. In particular, the locating bushing 510 may extend in the second horizontal direction from the rear surface of the stacker base 320.

The locating pin 520 moves in the vertical direction and be selectively inserted into the locating bushing 510. The actuator 530 may move the locating pin 520 in the vertical direction. The actuator 530 may be mounted on the fixed table bed 210. In the present embodiment, the actuator 530 may include a cylinder.

Therefore, in the material machining mode, when the locating pin 520 moved upward by the actuator 530 is inserted into the locating bushing 510, the stacker mechanism 300 is fixed to the table bed 210. That is, in the material machining mode, the stacker mechanism 300 cannot move in the second horizontal direction on the table bed 210. In contrast, only the table 250 may move in the second horizontal direction on the table bed 210.

Hereinafter, an operation of the attachment exchange apparatus of the horizontal boring machine according to the present embodiment will be described in detail.

First, in the material machining mode, the actuator 530 may move the locating pin 520 upward in the vertical direction. Therefore, the locating pin 520 may be inserted into the locating bushing 510. Because the actuator 530 is fixed to the table bed 210, the stacker mechanism 300 may be restrained by the locating pin 520 inserted into the locating bushing 510. That is, in the material machining mode, the stacker mechanism 300 cannot move in the second horizontal direction on the table bed 210.

In this state, the ball screw 220 is rotated by the motor 240. The table base 230, which engages with the ball screw 220, is conveyed in the second horizontal direction on the table bed 210. Therefore, the table 250, on which the material is seated, may be positioned at the front side of the spindle head 100 that is a material machining position. In particular, the table base 230 is not conveyed to a docking position of the stacker mechanism 300. Therefore, the table base 230 may not be docked with the stacker base 320 by the docking mechanism 400.

In the attachment exchange mode, the actuator 530 may move the locating pin 520 downward in the vertical direction. Therefore, the locating pin 520 is separated from the locating bushing 510, such that the stacker mechanism 300 may be unrestrained.

In this state, the ball screw 220 is rotated by the motor 240. The table base 230, which engages with the ball screw 220, is conveyed in the second horizontal direction on the table bed 210. The table base 230 is conveyed to the docking position. The clamping pin 430 is inserted into the clamping groove 412 of the clamper 410, such that the clamper 410 clamps the clamping pin 430. The stacker mechanism 300 is docked on the table mechanism 200 by the operation of the docking mechanism 400. Therefore, a rotational force of the single ball screw 220 may be transmitted to the stacker mechanism 300 through the table mechanism 200 and the docking mechanism 400. That is, in the present embodiment, in the attachment exchange mode, the table mechanism 200 and the stacker mechanism 300 may be conveyed together only by using the single ball screw 220 by using the docking mechanism 400.

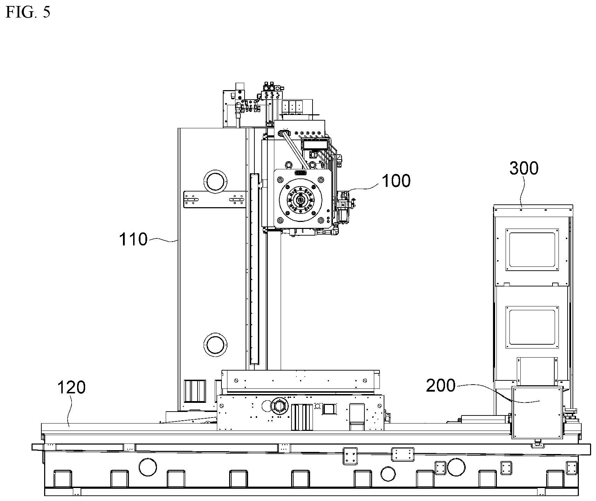

FIGS. 5 to 7 are side views sequentially illustrating operations of the horizontal boring machine in FIG. 1 in the attachment exchange mode.

Referring to FIG. 5, the stacker mechanism 300 may be conveyed in the second horizontal direction together with the table mechanism 200 by the rotation of the ball screw 220 and positioned at the front side of the spindle head 100.

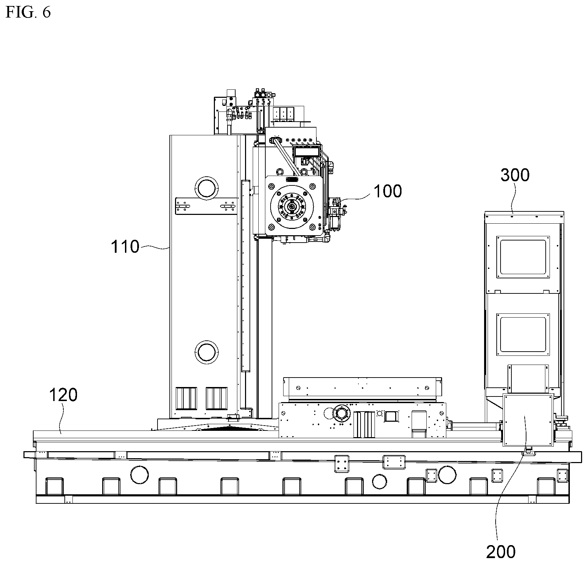

Referring to FIG. 6, the conveyance mechanism 120 may move the spindle head 100 in the first horizontal direction, such that the spindle head 100 may be disposed at an attachment exchange position.

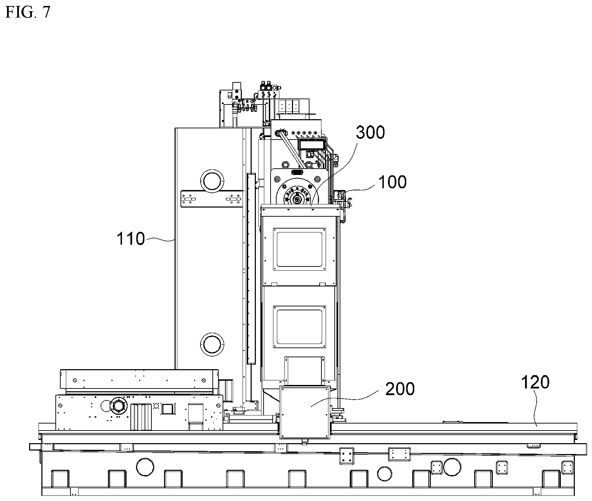

Referring to FIG. 7, the existing attachment mounted on the spindle head 100 may be exchanged for a new attachment accommodated in the stacker mechanism 300.

As described above, according to the present invention, in the material machining mode, the docking mechanism does not dock the stacker mechanism on the table mechanism, and the locating mechanism fixes the stacker mechanism to the table bed. In contrast, in the attachment exchange mode, the stacker mechanism is unfixed from the locating mechanism, and the docking mechanism docks the stacker mechanism on the table mechanism. Therefore, in the attachment exchange mode, the stacker mechanism may be conveyed together with the table mechanism by using only the single ball screw for conveying the table mechanism. Therefore, because the attachment exchange apparatus does not include a separate ball screw and components related to the separate ball screw, the attachment exchange apparatus may have a small size and a simple structure. As a result, the unit price of the horizontal boring machine may also be reduced.

## Claims

1. A horizontal boring machine comprising:
a spindle head (100) on which an attachment for machining a material is mounted;
a table mechanism (200) disposed at a front side of the spindle head (100) and configured to convey the material in a horizontal direction;
a stacker mechanism (300) disposed at the front side of the spindle head (100) and configured to accommodate a new attachment; and
an attachment exchange apparatus, comprising:
a docking mechanism (400) disposed between the stacker mechanism (300) and the table mechanism (200) and configured to dock the stacker mechanism (300) on the table mechanism (200) in a mode in which the attachment mounted on the spindle head (100) is exchanged for the attachment accommodated in the stacker mechanism (300); and
a locating mechanism (500) disposed on a rear surface of the stacker mechanism (300) opposite to the table mechanism (200) and configured to fix the stacker mechanism (300) in a material machining mode by the attachment mounted on the spindle head (100),
wherein the table mechanism (200) comprises:
a table bed (210) disposed in the horizontal direction,
a table (250) connected to be movable in the horizontal direction on the table bed (210);
a ball screw (220) rotatably disposed on the table bed (210) and configured to engage with the table (250),
a motor (240) configured to rotate the ball screw (220), and
a table base (230) interposed between the table bed (210) and the table (250) and configured to engage with the ball screw (220), the table base (230) being configured to be selectively docked on the stacker mechanism (300) by the docking mechanism (400);
wherein the docking mechanism (400) comprises:
a clamper (410) mounted on the table mechanism (200) and configured to move in the horizontal direction, the clamper (410) having a clamping groove (412);
a clamping block (420) extending in the horizontal direction from the stacker mechanism (300) to the table mechanism (200); and
a clamping pin (430) mounted on the clamping block (420) and configured to be inserted into the clamping groove (412) in the mode in which the attachment is exchanged,
wherein the locating mechanism (500) comprises:
a locating bushing (510) mounted on the stacker mechanism (300) in the horizontal direction;
a locating pin (520) configured to be inserted into the locating bushing (510) in the mode in which the material is machined; and
a cylinder configured to selectively move the locating pin (520) upward or downward,
wherein the locating mechanism (500) fixes the stacker mechanism (300) to the table bed (210) in the material machining mode.

2. The horizontal boring machine of claim 1, wherein the table mechanism (200) further comprises a pair of guide shafts (260) disposed on the table bed (210) and configured to guide a horizontal movement of the table base (230).

3. The horizontal boring machine of claim 1, wherein the stacker mechanism (300) comprises:
a stacker (310) configured to accommodate the attachment; and
a stacker base (320) on which the stacker (310) is mounted, the stacker base (320) being configured to be selectively docked on the table mechanism (200) by the docking mechanism (400).

4. The horizontal boring machine of claim 1, wherein the locating mechanism (500) further comprises an actuator (530) configured to selectively move the locating pin upward or downward.

5. The horizontal boring machine of claim 4, wherein the actuator (530) comprises a cylinder.

## Patentansprüche

1. Horizontalbohrmaschine, umfassend:
einen Spindelkopf (100), an dem ein Anbauteil zur Bearbeitung eines Materials montiert ist;
einen Tischmechanismus (200), der an einer Vorderseite des Spindelkopfs (100) angeordnet und so konfiguriert ist, dass er das Material in horizontaler Richtung befördert;
einen Stapelmechanismus (300), der an der Vorderseite des Spindelkopfs (100) angeordnet und so konfiguriert ist, dass er ein neues Anbauteil aufnimmt; und
eine Vorrichtung zum Austausch von Anbauteilen, umfassend:
einen Andockmechanismus (400), der zwischen dem Stapelmechanismus (300) und dem Tischmechanismus (200) angeordnet und so konfiguriert ist, dass er den Stapelmechanismus (300) an den Tischmechanismus (200) in einem Modus andockt, in dem das an den Spindelkopf (100) montierte Anbauteil gegen das in dem Stapelmechanismus (300) aufgenommene Anbauteil ausgetauscht wird; und
einen Positionierungsmechanismus (500), der an einer hinteren Oberfläche des Stapelmechanismus (300) gegenüber dem Tischmechanismus (200) angeordnet und so konfiguriert ist, dass er den Stapelmechanismus (300) in einem Materialbearbeitungsmodus durch das auf dem Spindelkopf (100) montierte Anbauteil fixiert,
wobei der Tischmechanismus (200) umfasst:
ein Tischbett (210), das in horizontaler Richtung angeordnet ist,
einen Tisch (250), der so verbunden ist, dass er in horizontaler Richtung auf dem Tischbett (210) bewegt werden kann;
eine Kugelumlaufspindel (220), die drehbar auf dem Tischbett (210) angeordnet und so konfiguriert ist, dass sie mit dem Tisch (250) in Eingriff steht,
einen Motor (240), der so konfiguriert ist, dass er die Kugelumlaufspindel (220) dreht, und
eine Tischbasis (230), die zwischen dem Tischbett (210) und dem Tisch (250) angeordnet und so konfiguriert ist, dass sie mit der Kugelumlaufspindel (220) in Eingriff steht, wobei die Tischbasis (230) so konfiguriert ist, dass sie durch den Andockmechanismus (400) wahlweise an dem Stapelmechanismus (300) angedockt wird;
wobei der Andockmechanismus (400) umfasst:
eine Klemmvorrichtung (410), die an dem Tischmechanismus (200) montiert und so konfiguriert ist, dass sie sich in horizontaler Richtung bewegt, wobei die Klemmvorrichtung (410) eine Klemmnut (412) aufweist;
einen Klemmblock (420), der sich in horizontaler Richtung von dem Stapelmechanismus (300) zu dem Tischmechanismus (200) erstreckt; und
einen Klemmstift (430), der an dem Klemmblock (420) montiert und so konfiguriert ist, dass er in dem Modus, in dem das Anbauteil ausgetauscht wird, in die Klemmnut (412) eingesetzt wird;
wobei der Positionierungsmechanismus (500) umfasst:
eine Positionierungsbuchse (510), die in horizontaler Richtung an dem Stapelmechanismus (300) montiert ist;
einen Positionierungsstift (520), der so konfiguriert ist, dass er in dem Modus,
in dem das Material bearbeitet wird, in die Positionierungsbuchse (510) eingesetzt wird; und
einen Zylinder, der so konfiguriert ist, dass er den Positionierungsstift (520) wahlweise nach oben oder nach unten bewegt, wobei der Positionierungsmechanismus (500) den Stapelmechanismus (300) in dem Materialbearbeitungsmodus an dem Tischbett (210) fixiert.

2. Horizontalbohrmaschine nach Anspruch 1, wobei der Tischmechanismus (200) weiterhin ein Paar Führungswellen (260) umfasst, die auf dem Tischbett (210) angeordnet und so konfiguriert sind, dass sie eine horizontale Bewegung der Tischbasis (230) führen.

3. Horizontalbohrmaschine nach Anspruch 1, wobei der Stapelmechanismus (300) umfasst:
eine Stapelvorrichtung (310), die so konfiguriert ist, dass sie das Anbauteil aufnimmt; und
eine Stapelbasis (320), auf der die Stapelvorrichtung (310) montiert ist, wobei die Stapelbasis (320) so konfiguriert ist, dass sie durch den
Andockmechanismus (400) wahlweise an dem Tischmechanismus (200) angedockt wird.

4. Horizontalbohrmaschine nach Anspruch 1, wobei der Positionierungsmechanismus (500) weiterhin einen Aktuator (530) umfasst, der so konfiguriert ist, dass er den Positionierungsstift wahlweise nach oben oder nach unten bewegt.

5. Horizontalbohrmaschine nach Anspruch 4, wobei der Aktuator (530) einen Zylinder umfasst.

## Revendications

1. Aléseuse horizontale, comprenant :
une tête porte-broche (100) sur laquelle est monté un accessoire pour l'usinage d'un matériau ;
un mécanisme de table (200) disposé sur le côté avant de la tête porte-broche (100) et prévu pour transporter le matériau dans une direction horizontale ;
un mécanisme d'empilement (300) disposé sur le côté avant de la tête porte-broche (100) et prévu pour recevoir un nouvel accessoire ; et
un dispositif de changement d'accessoire comprenant :
un mécanisme de connexion (400) disposé entre le mécanisme d'empilement (300) et le mécanisme de table (200) et prévu pour fixer le mécanisme d'empilement (300) sur le mécanisme de table (200) dans un mode où l'accessoire monté sur la tête porte-broche (100) est changé pour l'accessoire reçu dans le mécanisme d'empilement (300) ; et
un mécanisme de positionnement (500) disposé sur une face arrière du mécanisme d'empilement (300) opposée au mécanisme de table (200) et prévu pour fixer le mécanisme d'empilement (300) en mode d'usinage par l'accessoire monté sur la tête porte-broche (100), où le mécanisme de table (200) comprend :
un support de table (210) disposé dans la direction horizontale,
une table (250) raccordée de manière à être mobile dans la direction horizontale sur support de table (210) ;
une vis à bille (220) disposée de manière rotative sur le support de table (210) et prévue pour être en prise avec la table (250),
un moteur (240) prévu pour faire tourner la vis à bille (220), et
une base de table (230) intercalée entre le support de table (210) et la table (250) et prévue pour être en prise avec la vis à bille (220), ladite base de table (230) étant prévue pour être fixée sélectivement sur le mécanisme d'empilement (300) par le mécanisme de connexion (400) ;
où le mécanisme de connexion (400) comprend :
un dispositif de serrage (410) monté sur le mécanisme de table (200) et prévu pour se déplacer dans la direction horizontale, ledit dispositif de serrage (410) présentant une rainure de serrage (412) ;
un bloc de serrage (420) s'étendant dans la direction horizontale, du mécanisme d'empilement (300) au mécanisme de table (200) ; et
une goupille de serrage (430) montée sur le bloc de serrage (420) et prévue pour être insérée dans la rainure de serrage (412) dans le mode de changement d'accessoire,
où le mécanisme de positionnement (500) comprend :
une douille de positionnement (510) montée sur le mécanisme d'empilement (300) dans la direction horizontale ;
une broche de positionnement (520) prévue pour être insérée dans la douille de positionnement (510) dans le mode d'usinage du matériau ; et
un cylindre prévu pour déplacer sélectivement la broche de positionnement (520) vers le haut ou vers le bas,
le mécanisme de positionnement (500) fixant le mécanisme d'empilement (300) au support de table (210) en mode d'usinage du matériau.

2. Aléseuse horizontale selon la revendication 1, où le mécanisme de table (200) comprend en outre une paire d'arbres de guidage (260) disposés sur le support de table (210) et prévus pour guider un déplacement horizontal de la base de table (230).

3. Aléseuse horizontale selon la revendication 1, où le mécanisme d'empilement (300) comprend :
un empileur (310) prévu pour recevoir l'accessoire ; et
une base d'empileur (320) sur laquelle l'empileur (310) est monté, ladite base d'empileur (320) étant prévue pour être fixée sélectivement sur le mécanisme de table (200) par le mécanisme de connexion (400).

4. Aléseuse horizontale selon la revendication 1, où le mécanisme de positionnement (500) comprend en outre un actionneur (530) prévu pour déplacer sélectivement la broche de positionnement vers le haut ou vers le bas.

5. Aléseuse horizontale selon la revendication 4, où l'actionneur (530) comprend un cylindre.
